# DEMANDE DE BREVET EUROPEEN

(11) **EP 1 072 843 A1**
(43) Date de publication de la demande: **31.01.2001**
(21) Numéro de dépôt: 99202473.7
(22) Date de dépôt: 28.07.1999
(51) Int. Cl.: F23D 14/12, A47J 37/00, A47J 37/07, D03D 15/00

(54) **Dispositif de cuisson par rayonnements infra-rouges**

(71) Demandeur: Saey N.V., 8501 Kortrijk/Heule (BE)
(72) Inventeur: Saey, Stephane, 8500 Kortrijk (BE)
(74) Mandataire: Leherte, Georges M.L.M., Dr.

(57) **Abrégé**

L'invention concerne un dispositif de cuisson, en particulier un dispositif de type "barbecue", comprenant un ou plusieurs brûleurs à infra-rouges alimenté(s) au gaz, destiné(s) à cuire des aliments disposés au niveau d'un ou plusieurs foyer(s) de ce dispositif, dans lequel on utilise des brûleurs à membrane textile à base de fibres métalliques essentiellement paralèlles, ayant un diamètre compris entre 15 et 150 µm, en particulier à base de faisceaux de telles fibres métalliques obtenues par rabottage.

## Description

L'invention a pour objet un dispositif de cuisson utilisant comme source d'énergie, essentiellement, un émetteur de rayonnements infra-rouges; notamment un dispositif mobile de cuisson, pour l'intérieur et pour l'extérieur, utilisant une telle source d'énergie. Plus particulièrement, l'invention a pour objet un appareil de type "barbecue", de conception nouvelle, pour usage aussi bien à l'intérieur qu'à l'extérieur, utilisant comme source d'énergie un type particulier de brûleurs au gaz.

Dans le présent contexte, on entend par appareil de type "barbecue" tout appareil de cuisson pouvant être utilisé en plein air et comportant au moins la fonction de griller.

Les barbecues classiques utilisent comme source d'énergie du charbon de bois ou des éléments rayonnants (en pierre réfractaire, pierre de lave, acier, etc) chauffés par des résistances électriques ou des brûleurs à gaz. Bien que largement répandus, ils présentent un certain nombre d'inconvénients: (i) un temps de préchauffage est nécessaire avant de pouvoir commencer à cuire les aliments; (ii) l'allumage, au moins en ce qui concerne les barbecues utilisant le charbon de bois, n'est pas toujours facile; il est fonction des conditions atmosphériques; (iii) l'entretien de l'appareil est fastidieux; (iv) leur utilisation est limitée au grillage des aliments; etc.
Les systèmes à "cuisson de contact", comme par exemple les appareils de type "pierrade", utilisent comme source d'énergie une plaque (en acier, pierre, etc) chauffée par des flammes de gaz ou par des résistances électriques. C'est cette plaque qui transmet, par contact, la chaleur aux aliments qui sont placés dessus. Ces systèmes de cuisson présentent les mêmes inconvénients énumérés ci-dessus que les barbecues classiques.

Par ailleurs, les brûleurs à infra-rouges alimentés au gaz, à base de céramique, constituent une autre source de chaleur connue. Ils présentent cependant comme désavantage d'être très fragiles, notamment d'être très sensibles aux éclaboussures de graisse et d'eau, et d'être peu résistants aux chocs et aux variations atmosphériques. De tels brûleurs céramiques sont notamment utilisés pour des rôtissoires, mais étant donnée leur fragilité, ils ne peuvent alors être utilisés que verticalement et toujours avec un dispositif de protection contre les éclaboussures, comme par exemple une toile métallique.

La présente invention a pour objet un nouveau dispositif de cuisson qui évite les problèmes évoqués ci-dessus.

Pour cela, le dispositif de cuisson comprend un ou plusieurs brûleurs à infra-rouges alimenté(s) au gaz, destiné(s) à cuire des aliments disposés au niveau d'un ou plusieurs foyer(s) de ce dispositif. Il a la particularité de contenir au moins un brûleur à membrane textile à base de fibres métalliques essentiellement paralèlles, ayant un diamètre entre 15 et 150 µm.

Selon un mode de réalisation particulier de l'invention, la ou les membrane(s) textile(s) de ce dispositif de cuisson est/sont constituée(s) de faisceaux de fibres metalliques obtenues par rabottage.

De tels brûleurs sont connus en soi par le brevet BE1009485. Ils ne sont toutefois aucunement préconisés pour une utilisation comme brûleurs pour la cuisson des aliments.

L'utilisation de brûleurs à infra-rouges offre les avantages inhérents à ce type de brûleurs, à savoir une très importante chaleur de rayonnement, en plus de la chaleur par convection. De tels brûleurs répandent une lueur détectable à l'oeil, qui en outre peut être facilement dosée.

Les brûleurs à infra-rouges utilisés pour les dispositifs de cuisson selon la présente invention sont particulièrement résistants à toutes sortes d'influences extérieures et à toutes sortes de matières, notamment vis-à-vis des graisses, de l'eau et de l'humidité, des restes d'aliments, des chocs (tant mécaniques que thermiques), des intempéries, etc. De ce fait, le ou les brûleurs ne doit/doivent pas être protégé(s) pendant son/leur utilisation contre ces influences extérieures.

Cela permet un transfert direct de la chaleur entre le brûleur et les aliments.

Grâce au rayonnement important, il n'est pas nécessaire de prévoir un système d'accumulation pour stocker ou retenir la chaleur produite. Là aussi, on évite les entraves entre le brûleur et les aliments.

Les brûleurs utilisés dans le cadre de la présente invention ont en outre l'avantage d'être auto-nettoyants par pyrolyse: toutes les matières telles que les graisses, l'humidité et les restes d'aliments sont brûlés par le brûleur.

Selon un mode de réalisation particulier de l'invention, le dispositif de cuisson peut être mobile, et alimenté par du gaz contenu dans un conteneur sous pression, relié audit dispositif mobile. Il est cependant aussi possible de prévoir une connection par tuyau flexible au réseau de distribution de gaz.

Le dispositif de la présente invention peut aussi consister en un appareil, de type barbecue, comportant au moins une des fonctions de griller, de rôtir, de fumer, de frire et de cuire à l'étuvée et/ou la vapeur.

Selon un mode particulier de réalisation de l'invention, le dispositif de la présente invention peut comporter au moins la fonction de griller et au moins une des fonctions de rôtir, de fumer, de frire et de cuire à l'étuvée et/ou la vapeur.

Dans ce cas, le dispositif comporte de préférence des moyens pour créer une enceinte relativement close autour du foyer de cuisson.

Grâce à leur résistance exceptionnelle, les brûleurs mis en oeuvre selon l'invention, peuvent être disposés de diverses manières, ce qui permet de toutes nouvelles modalités de cuisson pour ce genre d'appareils.

Selon un premier mode de réalisation de l'invention, au moins un des brûleurs à membrane textile est disposé horizontalement en dessous du foyer de cuisson des aliments.

Selon un deuxième mode de réalisation de la présente invention, le dispositif de cuisson peut également avoir au moins un des brûleurs à membrane textile disposé horizontalement au-dessus du foyer de cuisson des aliments.

Selon un troisième mode de réalisation de l'invention, le dispositif revendiqué peut comporter aussi au moins un des brûleurs à membrane textile disposé verticalement, latéralement par rapport au foyer de cuisson des aliments.

Selon un dernier mode particulier de réalisation de l'invention, le dispositif de cuisson comprend au moins un brûleur ou ensemble de brûleurs à membrane textile disposé d'une manière orientable horizontalement en dessous du, verticalement et latéralement par rapport au, et/ou horizontalement au-dessus du foyer de cuisson des aliments.

Les figures 1 à 9 sont présentées pour clarifier l'invention. Elles correspondent à des modes particuliers de réalisation donnés à titre d'exemples et qui ne sauraient limiter la portée de l'invention.

Sur ces figures sont représentés:
- figure 1: différentes positions du brûleur par rapport au foyer de cuisson.
- figures 2a-2d: différentes formes et orientations du brûleur pour cuire des brochettes d'aliments.
- figures 3a-3d: des formes possibles du brûleur.
- figures 4a-4b: des formes de brûleur entourant les aliments.
- figures 5: un dispositif de cuisson avec un brûleur rayonnant vers le haut et vers le bas.
- figure 6: un dispositif comprenant une plaque de cuisson au-dessus du brûleur
- figure 7: un dispositif comprenant un lèche-frite entre le brûleur et l'aliment.
- figure 8: un dispositif comprenant une enceinte de cuisson.
- figure 9: un dispositif comprenant une plaque de cuisson en verre au dessu du brûleur.

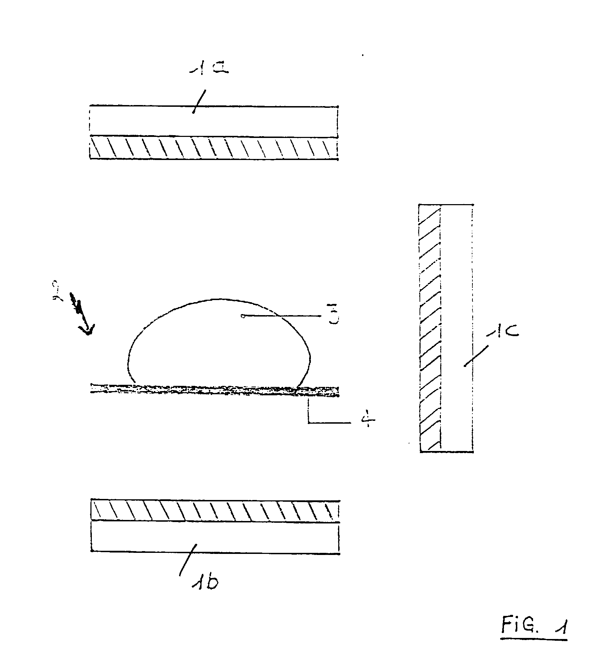

La figure 1 représente différentes positions possibles du brûleur (1) par rapport au foyer de cuisson (2) et des aliments (3) qui s'y trouvent, posés sur une grille de support (4): au-dessus (1a), en dessous (1b), sur le côté (1c). Le brûleur peut se trouver dans l'une ou l'autre de ces positions, séparément ou peut faire partie d'un dispositif grâce auquel le brûleur (ou l'ensemble de brûleurs) peut être orienté à volonté dans l'une ou l'autre des positions indiquées.
Lorsque le brûleur se trouve en position (1a) au-dessus des aliments (3), il remplit la fonction de grill; lorsqu'il est en position (1c) latérale par rapport aux aliments (3) (par exemple à l'arrière de l'appareil de cuisson), il constitue un brûleur idéal en association avec une broche et un tourne-broche; lorsque le brûleur est en position (1b) en dessous des aliments (3), il permet les fonctions d'un appareil de barbecue classique.

Le brûleur peut prendre différentes formes et est, soit placé en position fixe au-dessus (1a) des aliments (3) et/ou en dessous (1b) des aliments (3) et/ou latéralement (1c) par rapport aux aliments (3), par exemple à l'arrière de l'appareil, soit le brûleur (ou l'ensemble de brûleurs) est mobile et orientable par rapport aux aliments (3).

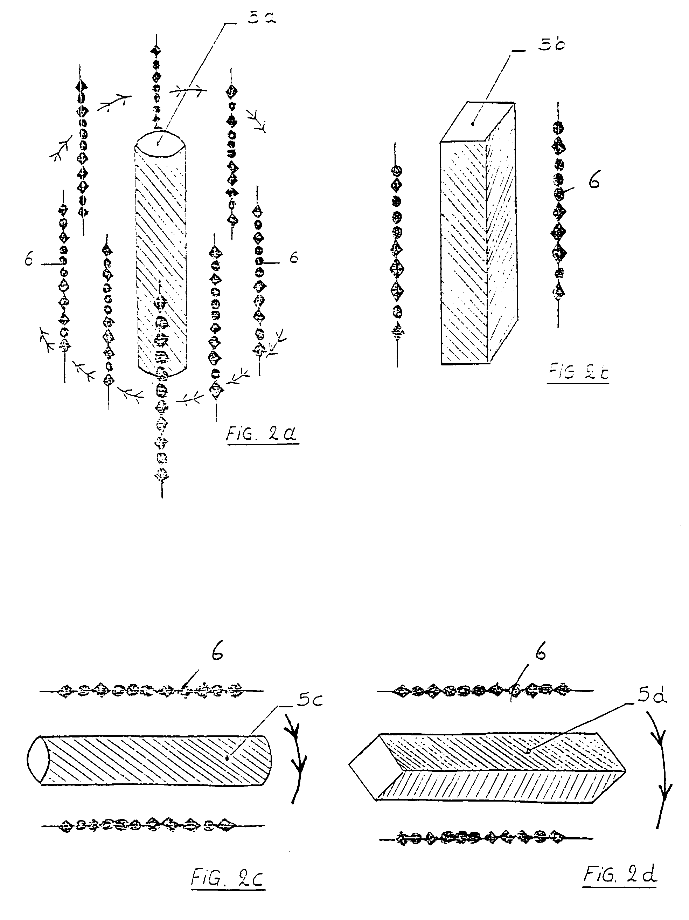

Les figures 2a-2d représentent des formes possibles pour un brûleur central (5), notamment un cylindre (figures 2a et 2c) et un parallélépipède (figures 2b et 2d), qui permettent de cuire ou de griller en même temps plusieurs aliments, par exemple à l'aide de brochettes (6) disposées autour du brûleur (figures 2a et 2b) ou au-dessus et en dessous (figures 2c et 2d), selon que le brûleur est placé verticalement (figures 2a et 2b) ou horizontalement (figures 2c et 2d).

Le ou les brûleur(s) peut/peuvent donc être placé(s) en position verticale ou horizontale, voire même en position inclinée, tandis que les aliments sont situés autour, soit en position fixe soit en position mobile.

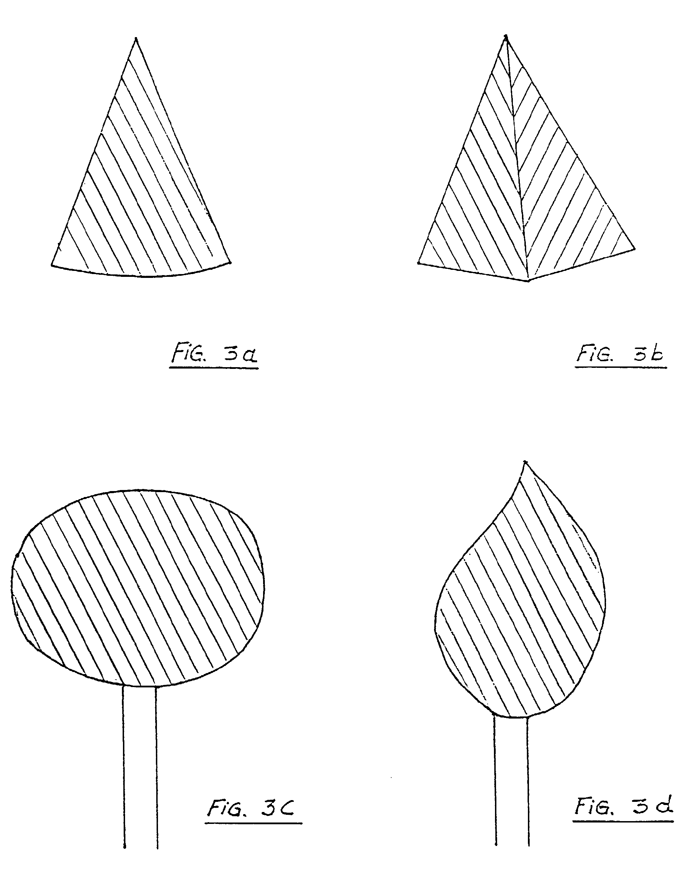

Dans les figures 3a-3d sont représentées des formes possibles du brûleur à caractère ornemental, telles que un cône à base circulaire (3a) ou à base triangulaire (3b), une boule (3c) et une flamme (3d).

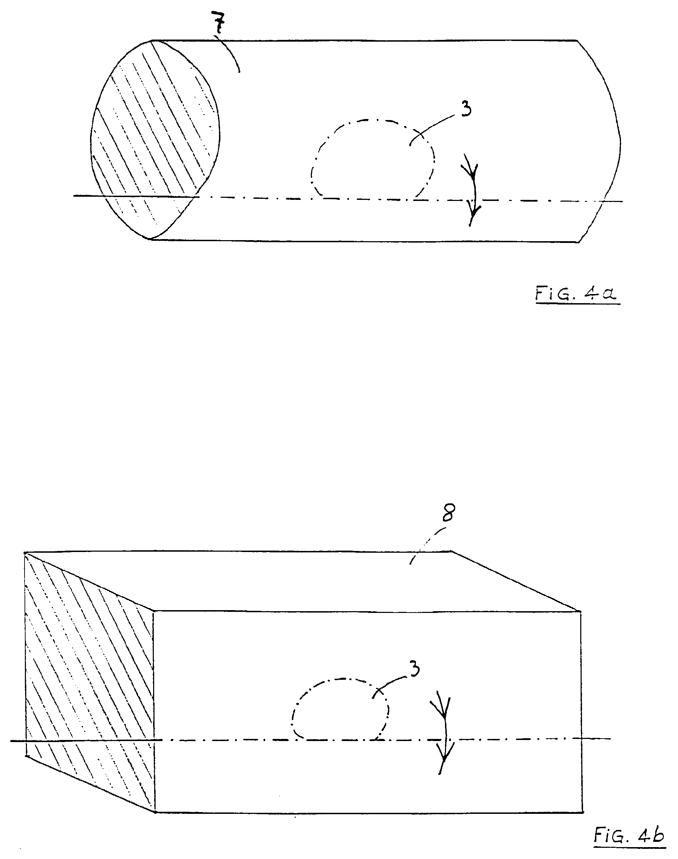

Un autre mode de réalisation possible est donné figures 4a et 4b, dans lequel le brûleur correspond à un cylindre creux (7) ou à un parallélépipède creux (8) à l'intérieur duquel se produit la cuisson de l'aliment. Les aliments sont donc pratiquement entièrement entourés par le brûleur et la chaleur de cuisson atteint donc les aliments de toutes les directions.

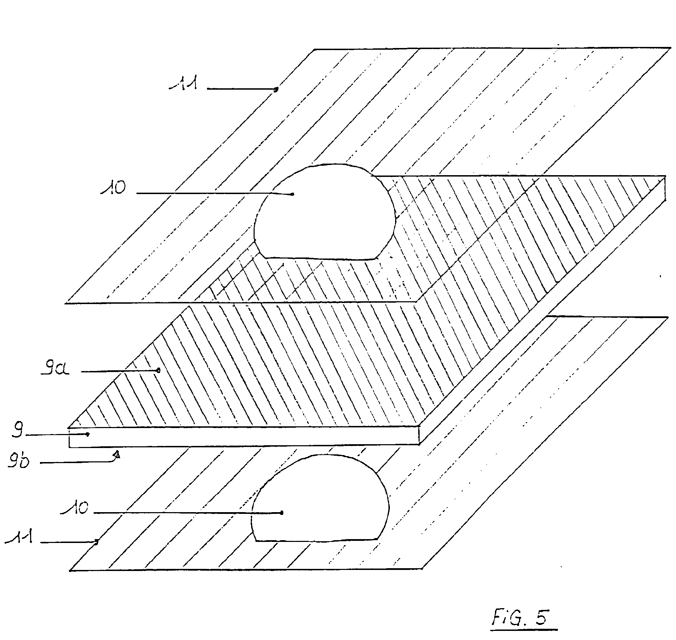

Il est possible de réaliser un dispositif de cuisson, comme l'illustre la figure 5, dans lequel le brûleur possède deux surfaces de rayonnement (9a) et (9b) planes horizontales, au-dessus et en dessous desquelles sont placées deux grilles (11) de cuisson permettant une cuisson simultanée des aliments (10).

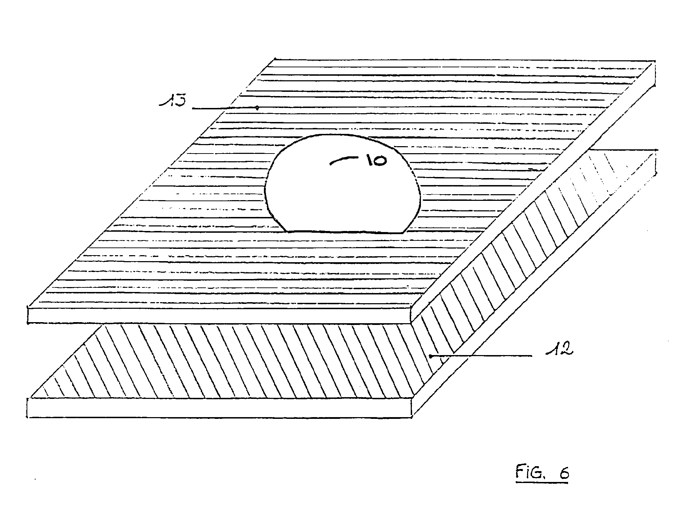

Dans la figure 6, le brûleur (12) correspond à une surface plane au-dessus de laquelle est placée une plaque de cuisson (13), telle qu'une plaque en fonte, réalisant ainsi la fonction de "grill de contact".

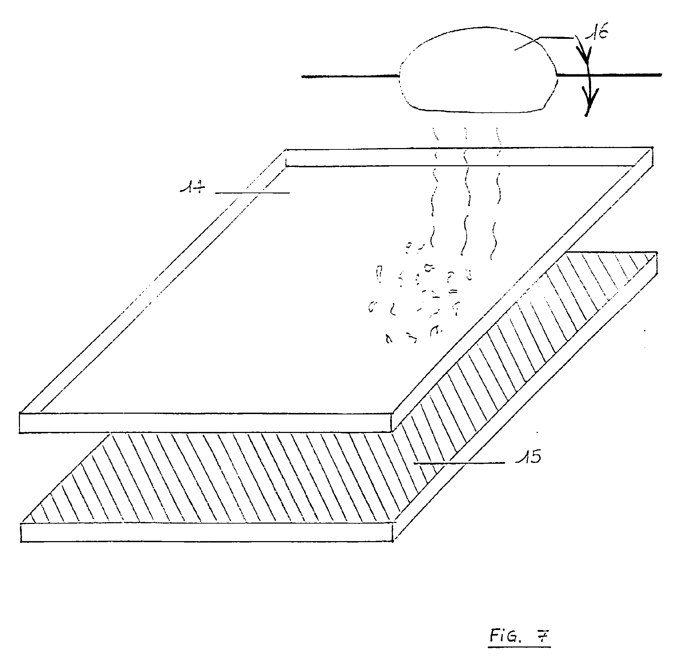

Dans le cas d'aliments particulièrement gras, on peut prévoir un lèche-frite (14) au-dessus du brûleur plan (15) et en dessous des aliments (16) par exemple en dessous de la broche sur laquelle sont piqués les aliments, comme le montre la figure 7. Ce système (14) collecte les graisses au fur et à mesure qu'elles coulent de la broche et fait en même temps fonction d'écran contre l'inflammation des vapeurs de graisses et des graisses liquides.

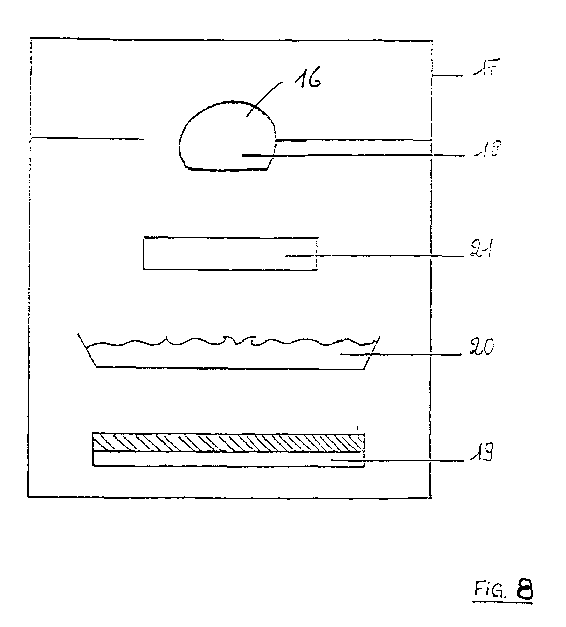

La figure 8 présente un exemple de réalisation d'un dispositif de cuisson comprenant une enceinte (17) relativement close, permettant notamment le fumage des aliments. Dans ce dispositif, on place par exemple l'aliment sur une broche (18) au-dessus du brûleur (19). Entre le brûleur (19) et la broche (18) sont disposés un réservoir d'eau (20) et/ou une natte de fumage (21).

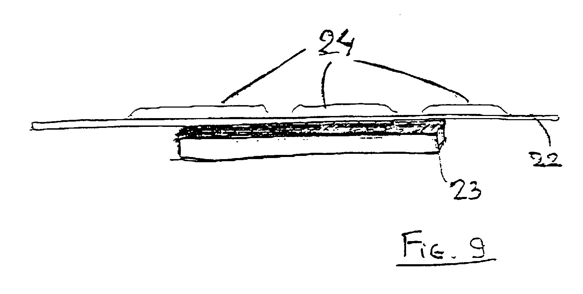

Dans la figure 9 est présenté un dispositif particulier de cuisson. Ce dispositif utilise une plaque de cuisson en verre (22) juste au-dessus du brûleur (23). Les aliments (24) sont posés à même la plaque (22), ce qui permet ainsi une cuisson rapide des aliments, par rayonnement à travers la plaque (22).

## Revendications

1. Dispositif de cuisson comprenant un ou plusieurs brûleur(s) à infra-rouges alimenté(s) au gaz, destiné(s) à cuire des aliments disposés au niveau d'un ou plusieurs foyer(s) de ce dispositif, **caractérisé en ce que** le dispositif comprend au moins un brûleur à membrane textile à base de fibres métalliques essentiellement paralèlles, ayant un diamètre entre 15 et 150 µm.

2. Dispositif selon la revendication 1, **caractérisé en ce que** la ou les membrane(s) textile(s) est/sont constituée(s) de faisceaux de fibres metalliques obtenues par rabottage.

3. Dispositif selon l'une ou l'autre des revendications 1 et 2, **caractérisé en ce qu'**il consiste en un dispositif de cuisson mobile, alimenté par du gaz contenu dans un conteneur sous pression, relié audit dispositif mobile.

4. Dispositif selon l'une ou l'autre des revendications précédentes, **caractérisé en ce qu'**il consiste en un appareil, de type barbecue, comportant au moins une des fonctions de griller, de rôtir, de fumer, de frire et de cuire à l'étuvée et/ou la vapeur.

5. Dispositif de type barbecue selon la revendication 4, **caractérisé en ce qu'**il comporte au moins la fonction de griller et au moins une des fonctions de rôtir, de fumer, et de cuire à l'étuvée et/ou la vapeur.

6. Dispositif de type barbecue selon la revendication 5, **caractérisé en ce qu'**il comporte des moyens pour créer une enceinte relativement close autour du foyer de cuisson.

7. Dispositif selon l'une ou l'autre de revendications précédentes, **caractérisé en ce que** au moins un des brûleurs à membrane textile est/sont disposé(s) horizontalement en dessous du foyer de cuisson des aliments.

8. Dispositif selon l'une ou l'autre de revendications précédentes, **caractérisé en ce que** au moins un des brûleurs à membrane textile est disposé horizontalement au-dessus du foyer de cuisson des aliments.

9. Dispositif selon l'une ou l'autre de revendications précédentes, **caractérisé en ce que** au moins un des brûleurs à membrane textile est disposé verticalement, latéralement par rapport au foyer de cuisson des aliments.

10. Dispositif selon l'une ou l'autre des revendications 1 à 6, **caractérisé en ce qu'il** comprend au moins un brûleur ou ensemble de brûleurs à membrane textile disposé d'une manière orientable horizontalement en dessous du, verticalement et latéralement par rapport au, et/ou horizontalement au-dessus du foyer de cuisson des aliments.
